# EUROPEAN PATENT SPECIFICATION

(11) **EP 4 124 766 B1**
(45) Date of publication and mention of the grant of the patent: **03.12.2025**
(21) Application number: 21188236.0
(22) Date of filing: 28.07.2021
(51) Int. Cl.: F16B 21/07, B60N 3/02, F16B 21/06

(54) **CLIP FOR FASTENING A FIRST ELEMENT TO A SECOND ELEMENT**
KLAMMER ZUR BEFESTIGUNG EINES ERSTEN ELEMENTS AN EINEM ZWEITEN ELEMENT
PINCE DE FIXATION D'UN PREMIER ÉLÉMENT SUR UN SECOND ÉLÉMENT

(43) Date of publication of application: 01.02.2023
(73) Proprietor: A. Raymond et Cie, 38000 Grenoble (FR)
(72) Inventor: BINKERT, Sven, 79540 Lörrach (DE); MASCHAT, Kevin, 79739 Schwörstadt (DE)
(74) Representative: Hoffmann Eitle

(56) References cited:
- DE-A1- 102005 062 979
- US-B2- 7 585 009
- US-B2- 8 950 043

## Description

The invention pertains to a clip for fastening a first element to a second element. The invention also pertains to a device having a first element and a clip. The invention also pertains to a system having a device and a second element. The invention also pertains to a method for assembly of the system.

From DE 10 2005 062 979 A1, a device (called Befestigungseinheit) is known which the device can be attached to a second element having a hole, which second element is called Trägerelement in DE 10 2005 062 979 A1 thus forming a system. The device according to DE 10 2005 062 979 A1 as a clip that has a first body, the first body comprising a head, which contains the Befestigungsteil 8a, and a tip, which is provided by the U-Quersteg 8d. In the design known from DE 10 2005 062 979 A1, a hollow shaft extends from the head to the tip along a longitudinal axis. Two retaining elements are provided which each have a normal position that is for example shown in Fig. 4 of DE 10 2005 062 979 A1 and have a retracted position, which is for example shown in Fig. 2 of DE 10 2005 062 979 A1. A respective tip is moved along a retraction direction indicated as PF1 in Fig. 2 as the retaining element is moved from the normal position to the retracted position. The respective retaining element is provided by end sections of an element of the first body, which element also forms a side-wall of the shaft that has the side-surface and whereby the end section is bend backwards at the tip of the first body forming a bended section (in the area of the U-Quersteg 8d), the bended section acting as a spring.

US 8,950,043 B2 discloses a connecting assembly for fastening a mount-on part to a carrier part, having a clip which includes a deformable locking section for fastening the clip to the carrier part, and a separate locking pin which is adapted to be received by the clip by a movement in a mounting direction along a mounting axis, the clip and the locking pin including cooperating latching members which form snap connections in a preassembly position and in a locking position to fix the locking pin axially on the clip.

From US 7,585,009 B2 a side curtain air bag deployment pillar bracket and garnish is known.

Given this background, the problem to be solved by the invention is to suggest a clip and/or a device and/or a system and/or a method that can be designed to have a higher retention force and/or lower assembly efforts and/or provides for a tolerance compensation.

This problem is solved by the clip according to claim 1, the device according to claim 9, the system according to claim 11 and the method according to claim 13. Preferred embodiments are described in the subordinate claims and the description following here after.

The invention is based on the basic idea to provide the clip with a second body in the form of an insert that is arranged inside the first body and can be moved inside the first body along the longitudinal axis from a first position to a second position. According to the invention, the insert is used to hold the retaining element in the retracted position. This gives the opportunity to insert the clip into the hole of a second element with the retaining element being held in the retracted position. This means that during the insertion of the shaft of the clip into a hole of the second element, the retaining element does not need to be pushed from the normal position to the retracted position by way of interaction with a rim of the hole or only to a lesser extent (for those embodiments, where in the retracted position, the tip of the retaining element is not fully arranged inside the shaft, but protrudes slightly over the side-surface of the shaft and comes into contact with the rim). In those designs, where inserting the shaft of the clip into the hole of the second element includes an interaction of a rim of the hole with a retaining element in order to move the retaining element from the normal position to the retracted position, the amount of force necessary to push in the shaft is also dependent on the strength of the spring that pretensions the retaining element to the normal position. Increasing this retention force in these designs automatically leads to an increase in the force necessary to push in the shaft. The invention does away with this dependency by way of using the insert to hold the retaining element in the retracted position. In a preferred embodiment, moving the insert to its second position sets free the retracted retaining element and allows the retaining element to move towards its normal position.

The clip according to the invention is suitable for fastening a first element to a second element. According to the invention, the clip has at least a first body and a second body. In preferred embodiments, the clip may have further bodies.

The first body of the clip comprises a head and a tip and has a hollow shaft that extends from the head to the tip along a longitudinal axis.

The head is intended to connect the clip to a first element. The design and the shape of the head are preferably adapted to the chosen way of connection of the head with the first element. In a preferred embodiment, the head has a square cross-section perpendicular to the longitudinal axis. In a preferred embodiment, the head is a hollow head. In a preferred embodiment the head has four side-walls, whereby neighboring side-walls are arranged at an angle of 90° to each other, thereby forming the square cross-section of the head.

In a preferred embodiment, three of the four side-walls of the head are solid side-walls and the fourth side-wall is made up of two sub-pieces being connected to each other by a closure in order to form the fourth side-wall. This design is especially advantageous in those embodiments, where the first body is a unitary piece made by way of bending from a metal cut-out. In a preferred embodiment, the closure holds together the first body after its individual pieces have been bend into place.

In a preferred embodiment, a side-wall of the head contains a protrusion or contains a lug. In a preferred embodiment of the device according to the invention, the first element has a recess and the protrusion or the lug of the side-wall of the head engages with the recess of the first element. In a preferred embodiment, this engagement is a form-fit engagement between the protrusion or lug of the side-wall of the head and the first element.

The first body has a tip. The tip is the end of the first body opposite the head. If the clip and/or the device according to the invention is used to be connected to a second element that has a hole, the tip can be used as that part of the first body that is inserted into the hole of the second element first. The tip may be adapted to facilitate such an insertion. The tip may be cone-shaped or pyramid-shaped.

In a preferred embodiment, the shape of the tip is also influenced in that in a preferred embodiment, the retaining element is an end section of an element of the first body, which element also forms a side-wall of the shaft that has the side-surface and whereby the element is bend backwards at the tip of the first body forming a bended section at the tip. In a preferred embodiment, this leads to the end section being arranged behind the side-wall of the shaft. In a preferred embodiment, the bended section can act as a spring.

The first body has a hollow shaft that extends from the head to the tip along a longitudinal axis. In a preferred embodiment, the hollow shaft has a first side-wall that has a side-surface and has a second side-wall, which is preferably arranged parallel to the first side-wall, whereby the second side-wall has a side-surface that points away from the side-surface of the first side-wall. In such an embodiment, the hollow shaft would be made up by these two side-walls whereby the sides of the shaft that are perpendicular to the two side-walls would be open sides in this particular design. In an alternative embodiment, the hollow shaft may contain a third side-wall and a fourth side-wall which preferably run at angles of 90° to the first side-wall and the second side-wall. In such a design, the hollow shaft would have a rectangular cross-section perpendicular to the longitudinal axis, the rectangular cross-section being provided by the first side-wall, the second side-wall, the third side-wall and the fourth side-wall.

In a preferred embodiment, the side-surface of the shaft is a flat surface that is arranged in a plane. In a preferred embodiment, the plane is arranged parallel to the longitudinal axis. However, designs are also feasible, where the plane would be arranged at an angle to the longitudinal axis. Such designs could include, for example, the side-surfaces to ran at an angle from the head towards the tip, for example to have the shaft taper towards the tip.

The first body has at least one retaining element. In a preferred embodiment, the first body has two retaining elements.

The retaining element has a normal position. In this normal position, a tip of the retaining element protrudes over a side-surface of the shaft by a first amount. According to the invention, the retaining element has a retracted position, in which the tip of the retaining element does not protrude over the side-surface of the shaft in a first alternative of the invention and is arranged inside the shaft, whereby an arrangement inside the shaft is considered to be achieved, if something does not protrude over the side-surface. Alternatively, the first body may be designed in such a manner that in the retracted position, the tip of the retaining element protrudes over the side-surface of the shaft, but protrudes over the side-surface of the shaft by a second amount that is smaller than the first amount.

According to the invention, the tip moves along a retraction direction as the retaining element is moved from the normal position to the retracted position. The retraction direction may be a straight line direction. In a preferred embodiment, the tip swivels about a bended section that is arranged at the tip or closer to the tip than the tip of the retaining element. This shows that the retraction direction could also be an arc-shaped direction.

The first body has a spring. Moving the retaining element from the normal position to the retracted position loads the spring such that in the retracted position, the retaining element is pretensioned to move back into the direction of the normal spring. In a preferred embodiment, the spring is not loaded when the retaining element is in the normal position. In such a design, the retaining element would be free from contact to other elements of the first body and the spring would not be loaded. Embodiments are also feasible, however, where the spring is loaded when the retaining element is in the normal position, but preferably loaded to a lesser extent compared to the load on the spring in the retracted position. In such a design, a piece of the retaining element could be in contact with a further element of the first body in the normal position and the partially loaded spring would press the retaining element against this further element. Such a design can be useful, if the retaining element is to be stabilized in its normal position.

As described above, the spring can be provided by a bended section of an element of the first body. In a preferred embodiment, the retaining element is an end section of an element of the first body, which element also forms a side-wall of the shaft that has the side-surface and whereby the element is bend backwards at the tip of the first body forming a bended section, which bended section acts as the spring. In a preferred embodiment, the tip of the retaining element is provided by a flag of the retaining element, the flag being a piece that is bend away from a further element of the retaining element. In a preferred embodiment, the retaining element has a basic body that is arranged inside the hollow shaft and whereby the flag protrudes from the base element towards a side-wall of the hollow shaft.

In a preferred embodiment, the shaft has a slit and the tip of the retaining element is arranged on an element of the retaining element that protrudes from the inside of the hollow shaft through the slit and protrudes over a side-surface of this side-wall when the retaining element is in the normal position. In a preferred embodiment, it is a flag of the retaining element that protrudes through the slit of the side-wall in the normal position.

In a preferred embodiment, one retaining element may have two tips. In a preferred embodiment, a retaining element has a basic body and has two flags that protrude at an angle to the basic body at opposite sides of the basic body. In a preferred embodiment, the basic body is a square-shaped body. In a preferred embodiment, the side-wall of the hollow shaft would have two slits arranged in parallel to each other, whereby the respective tip would be arranged on an element of the retaining element, preferably a flag of the retaining element, that protrudes from the inside of the hollow shaft through the respective slit such that the tip protrudes over the side-surface of this side-wall by a first amount when the retaining element is in the normal position.

In a preferred embodiment, the slit in the side-wall of the shaft through which the part of the retaining element that has the tip, for example the flag, protrudes is arranged parallel to the longitudinal axis.

In a preferred embodiment, where the hollow shaft has a flat side-wall and has at least one slit arranged in the side-wall through which an element of the retaining element that contains the tip protrudes in the normal position, the side-wall has a dimple shape part arranged at the end of the slit that is closer to the tip. The dimple shaped part of the side-wall at the end of the slit increases the resistance of the side-wall against being slid by the part of the retaining element that protrudes through the slit in cases where heavy forces that attempt to pull away the head of the clip from the tip of the retaining element are being applied to the clip, for example during an airbag deployment.

According to the invention, the clip has a second body that as an insert is arranged inside the first body and can be moved inside the first body along the longitudinal axis from a first position to a second position. According to the invention, the insert has a contact surface and the retaining element has a counter-surface, whereby the contact surface faces into the retraction direction and whereby the contact surface is in contact with the counter-surface when the insert is in the first position and the retaining element is in the retracted position. The insert hence is used to hold the retaining element in the retracted position.

The contact surface faces into the retraction direction. The feature according to which the contact surface faces into the retraction direction is understood to mean that the angle between the normal vector to the contact surface and the retraction direction is less than 90°. In a preferred embodiment the contact surface is a flat surface that is arranged in a plane. In a preferred embodiment the retraction direction crosses the plane when the insert is in the first position. In a preferred embodiment the angle between normal vector to the plane at the point where the retraction direction crosses the plane and the direction into which the retraction direction points as it crosses the plane in this point, is less than 90°. The direction into which the retraction direction points as it crosses the plane in this point preferably is the tangential direction of an arc-shaped retraction direction.

In a preferred embodiment, the contact surface is a flat surface that is arranged in a plane that runs at an angle to the longitudinal direction that is less than 25°, preferably less than 45°, preferably less than 30° and most preferably runs parallel to the longitudinal axis. Arranging the contact surface at small angles relative to the longitudinal axis or preferably parallel to the longitudinal axis prevents the insert from being pushed away from the first position in the direction of the second position by the restoring force of the spring.

In a preferred embodiment, where the retaining element has a basic body, preferably a rectangular basic body, the counter-surface of the retaining element is a surface of the basic body.

In a preferred embodiment, the contact surface is a surface that borders a slit in the insert. In a preferred embodiment, a part of the basic body of the retaining element is arranged inside the slit of the insert, when the insert is in the first position and the retaining element is in the retracted position. Providing a slit in the insert allows for the insert to have a first contact surface and a second contact surface, whereby the first contact surface faces the second contact surface. The first contact surface in this embodiment can be used to interact with a counter-surface on a first retaining element. The second contact surface can be used to interact with a counter-surface on a second retaining element.

In a preferred embodiment, the insert is block-shaped or is a hollow body that is provided by four side-walls whereby neighboring side-walls are arranged at 90° to each other. In such an embodiment, the insert may be reinforced in the corners, for example may contain more material in the corners than in the areas between the corners. Reinforcing the corners of a square-shaped hollow insert allows the weight of the insert to be reduced, but for the insert to interact with the corners of a hollow square-shaped head providing a good sliding movement of the insert in the head of the first body.

In a preferred embodiment, the insert is fully or predominantly arranged in the hollow shaft when the insert is in the first position. It might be preferable to have a portion of the insert still being arranged inside the head when the insert is in the first position. This part of the insert can be used to stabilize the positioning of the insert, especially in those cases, where the hollow shaft is only delimited by two side-walls and open towards the other sides.

In a preferred embodiment, the insert is fully or at least predominantly arranged inside the head when the insert is in the second position.

In a preferred embodiment, the insert has a protrusion, which protrusion extends from inside the shaft through a slit in the shaft to the outside of the shaft. The slit may be designed in such a manner that it continues from the shaft into the head. In an alternative, the insert has a protrusion, which protrusion extends from the inside of the head through a slit in the head to the outside of the head.

In a preferred embodiment, where the protrusion of the insert extends through a slit in the shaft, the slit in the shaft is arranged in the side-surface over which the tip of the retaining element protrudes when the retaining element is in the normal position.

In a preferred embodiment, the slit through which the protrusion of the insert protrudes is orientated to run in parallel to the longitudinal axis.

Arranging the insert to have a protrusion that protrudes from the inside of the shaft and/or the head to the outside allows for an interaction with the insert from the outside. Such an arrangement may, for example, be used to move the insert from the first position to the second position from the outside. The protrusion may, for example, be used to interact with a rim of a hole in a second element. In such a design, pushing the shaft into the hole of a second element would automatically lead to the protrusion of the insert interacting with the rim and being pushed from the first position to the second position, thereby setting free the retaining element.

In a preferred embodiment the protrusion of the insert protrudes over the side-wall of the shaft at a point that is closer to the head, when the insert is in the first position, than the point where the tip of the retaining element would protrude over the side-wall of the shaft, if the retaining element were in the normal position. For those embodiments where the protrusion of the insert protrudes through a slit in the side-wall and the tip of the retaining element is arranged on an element of the retaining element, for example a flag, that protrudes through a slit in the side-wall, the end of the slit for the protrusion of the insert that is furthest away from the head is arranged closer to the head than the end of the slit for the element that has the tip of the retainer.

In a preferred embodiment, the insert has two protrusions being arranged on opposite sides of the insert, each protrusion extending from the inside of the first element through a respective slit in the shaft and/or the head to the outside. Further embodiments are feasible, where the insert has a protrusion on each of its side-walls, for example in designs where the insert is rectangular and has four protrusions, one protrusion on each side.

In a preferred embodiment, the slit is arranged in such a manner, preferably parallel to the longitudinal axis that the protrusion moves along the shaft as the insert is moved from the first position in the direction of the second position.

In a preferred embodiment, the contact surface of the insert is not in contact with the counter-surface when the insert is in the second position.

In a preferred embodiment, at least one holding element is provided that protrude into the hollow shaft that engage with recesses in the insert to hold the insert in the first position. Such holding elements may be dimples that are arranged in a side-wall of the shaft. Providing dimples allows for the insert to be held in the first position if no force or only a little force is applied to the insert to move the insert from the first position to the second position. Providing dimples allows for the holding mechanism provided by these dimples to be overcome, however, once a force is applied to the insert that is directed towards the second position and is above a certain threshold value.

The holding elements may be arranged symmetrically on a side-wall of the shaft, preferably symmetrically about a slit that is arranged in the middle of the side-wall and through which slit the protrusion of the insert protrudes.

In a preferred embodiment, the first body is a unitary piece that is made by bending from a metal cut-out.

In a preferred embodiment, the second body is a unitary piece. In a preferred embodiment, the second body is a unitary piece made from a plastic material.

In a preferred embodiment, the clip has a third body. This third body is a blocking pin. In a preferred embodiment, the blocking pin may be inserted into the head from the top, the top being the opposite side of the head in relation to the tip.

In a preferred embodiment, the clip has a hollow head, a hollow shaft and a hollow insert. In a preferred embodiment, the blocking pin may be inserted from the top of the head to the hollow head, the hollow shaft and the hollow insert. The blocking pin may be used to block the retaining element from moving from the normal position to the retracted position.

The device according to the invention has a first element and a clip according to the invention that is attached to the first element. The clip according to the invention can be attached to the first element by way of form-fit, friction fit, gluing, welding or a combination of these methods.

In a preferred embodiment, the first element is a grab handle as they are arranged in the ceiling of cars. In a preferred embodiment, the first element has a joint connecting a first part of the first element, for example a base, a second part of the first element, for example the handle bar.

In a preferred embodiment, the first element has a protrusion, for example a latch, whereby the protrusion has a surface that faces away from the tip of the clip and is in contact with a surface of the head of the clip that faces towards the tip. In a preferred embodiment, the surface of the head of the clip that faces towards the tip is the bottom edge of a wall of the head, for example the bottom edge of one of the four walls of the head that together make up the square-shaped head.

In a preferred embodiment, the first element has a channel, whereby the head of the clip is arranged in the channel. In a preferred embodiment, the channel allows access to at least parts of the head or the inside of a hollow head or the inside of a hollow head and a hollow shaft of the clip.

The system according to the invention has a device according to the invention and has a second element, whereby the second element has a hole, whereby the first element is arranged on a first side of the second element and the shaft of the clip extends through the hole from the first side to a second side, whereby the tip of the retaining element is arranged on the second side of the second element, which second site is opposite to the first side.

In a preferred embodiment of the system, the retaining element is in the normal position. In a preferred embodiment, the retaining element in the normal position has the tip of the retaining element protrudes over the side-surface of the shaft further than a rim of the hole in the second element, thereby preventing the shaft from being pulled out of the hole. **In** a preferred embodiment, the first amount, by which the tip of the retaining element protrudes over the side-surface of the shaft in the normal position, is larger than the distance between the side-surface and the rim of the hole when the shaft is arranged in the hole.

In a preferred embodiment, the first element is a grab handle and the second element is a pillar of a car.

According to the method of the invention, the system according to the invention is assembled in that the device according to the invention is in a first configuration, in which first configuration the retaining element is in the retracted position and the insert is in the first position. The device being in the first configuration, the method according to the invention provides for the device to be moved relative to the second element such that the shaft is moved through the hole of the second element. According to the method of the invention, the device is transformed from a first configuration into a second configuration, in which second configuration, the retaining element has moved from the retracted position towards the normal position.

In a preferred embodiment, during the movement of the device relative to the second element, a rim of the hole comes into contact with the protrusion of the insert, whereby a continued movement of the device relative to the second element leads to the protrusion moving in the slit. In a preferred embodiment, this movement of the protrusion in the slit leads to a movement of the insert from the first position towards the second position and preferably into the second position. In a preferred embodiment, this movement of the protrusion in the slit leads to the contact surface of the insert coming out of contact with the counter-surface and hence setting the retaining element free to move from the retracted position towards the normal position and preferably into the normal position.

In a preferred embodiment, the second element is or has a wall with the hole being a through-hole through the wall. In an alternative embodiment, the second element is a solid piece and the hole is a blind hole. In such an embodiment, the blind hole might have a diameter that is smaller than the space that the retaining element would need to return to the normal position. In such an embodiment, the tip of the retaining element may be designed to cut into the wall of the blind hole or may be held to rest against a wall of the blind hole with the restoring force of the spring pressing the tip against the wall of the blind hole.

In a preferred embodiment, the clip according to the invention is used to attach elements of a car to the body of the car.

Below the invention will be described with reference to figures that only show examples of the invention.
- Fig. 1: a schematic, perspective, exploded view of a clip according to the invention;
- Fig. 2: a schematic side view of an assembly of the clip according to the invention;
- Fig. 3: a schematic side view of the assembled clip according to Fig. 2;
- Fig. 4: a schematic sectional view of the assembled clip according to Fig. 2;
- Fig. 5: a schematic, perspective, exploded view of a system according to the invention;
- Fig. 6,a,b,c,d: schematic sectional views of the assembly of a system according to the invention;
- Fig. 7: a schematic sectional view of a device according to the invention;
- Fig. 8: a schematic perspective view of the device according to Fig. 7;
- Fig. 9: a schematic sectional view of a system according to the invention that makes use of the device of Fig. 7 and
- Fig. 10: a schematic perspective view of the system according to Fig. 9.

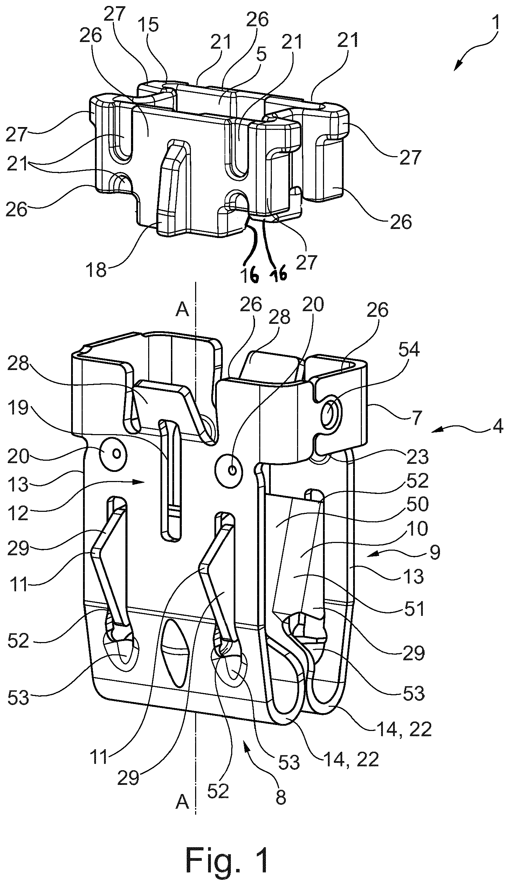

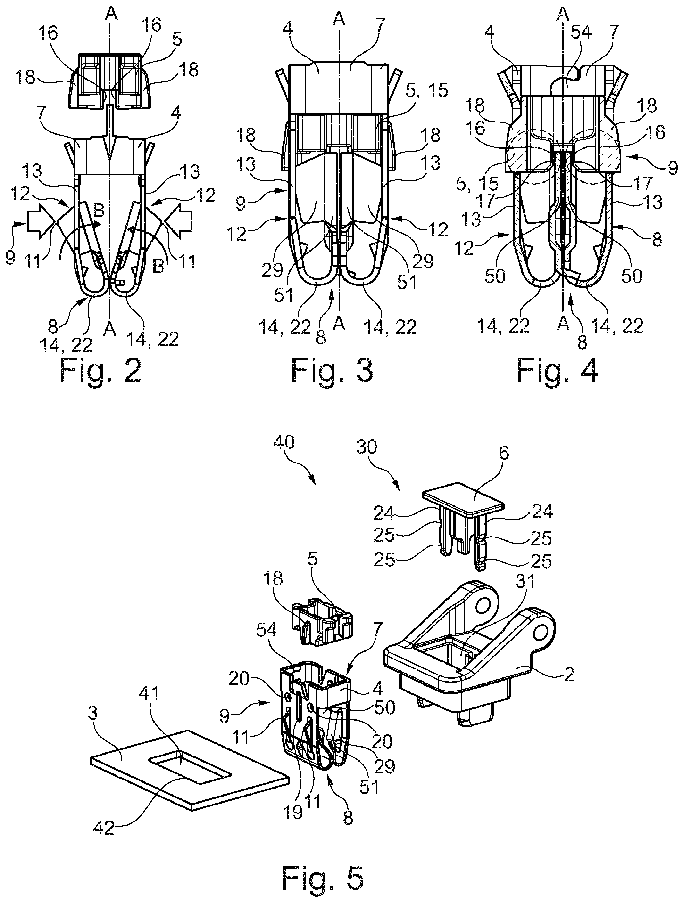

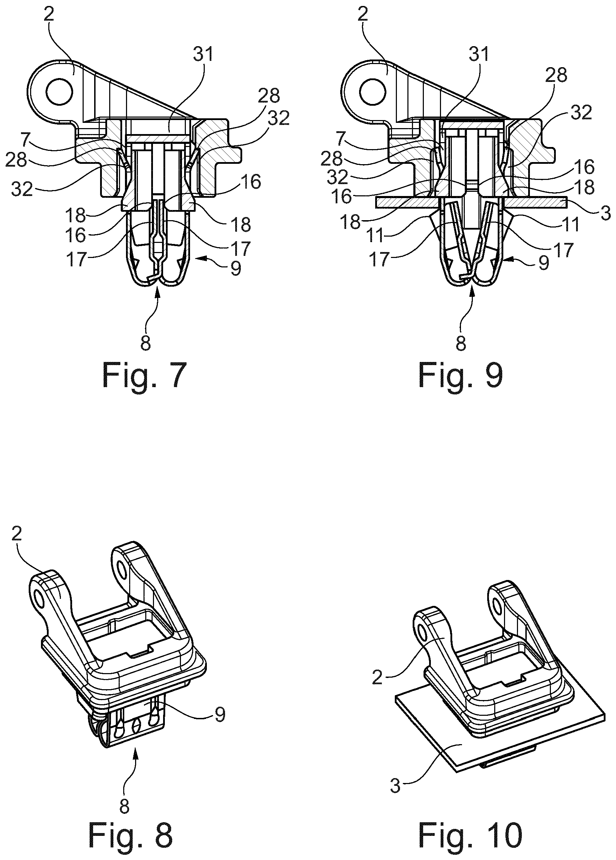

Fig. 1 shows a clip 1 that is suitable for fastening a first element 2 to a second element 3. The clip 1 has a first body 4 and a second body 5. In the embodiment as shown as part of the system of Fig. 5, 6, 9, 10 and in the embodiment as shown as part of the device of Fig. 7 and 8, the clip 1 has a third body 6.

The first body 4 has a head 7 and a tip 8 and a hollow shaft 9 that extends from the head 7 to the tip 8 along a longitudinal axis A. The first body 4 has two retaining elements 10, whereby each retaining element 10 has a normal position, in which a tip 11 of the respective retaining element 10 protrudes over a side-surface 12 of a side-wall 13 of the shaft 9 by a first amount. The retaining elements 10 shown each have two tips 11. The normal position is shown in Fig. 1, 2, 5, 6c), 6d), 9. Each retaining element 10 has a retracted position, in which the tip 11 of the retaining element 10 does not protrude over the side-surface 12 of the side-wall 13 of the shaft 11. The retracted position is shown in Fig. 3, 4, 6a), 6b), Fig 7.

The respective tip 11 of the retaining element 10 is moved along a retraction direction B as the retaining element 10 is moved from the normal position (Fig. 1, 2, 5, 6c), 6d), 9) to the retracted position (Fig. 3, 4, 6a), 6b), Fig 7).

A spring 14 is provided, whereby moving the retaining element 11 from the normal position (Fig. 1, 2, 5, 6c), 6d), 9) to the retracted position (Fig. 3, 4, 6a), 6b), Fig 7) loads the spring 14 such that in the retracted position (Fig. 3, 4, 6a), 6b), Fig 7), the retaining element 11 is pretensioned to move back into the direction of the normal position (Fig. 1, 2, 5, 6c), 6d), 9).

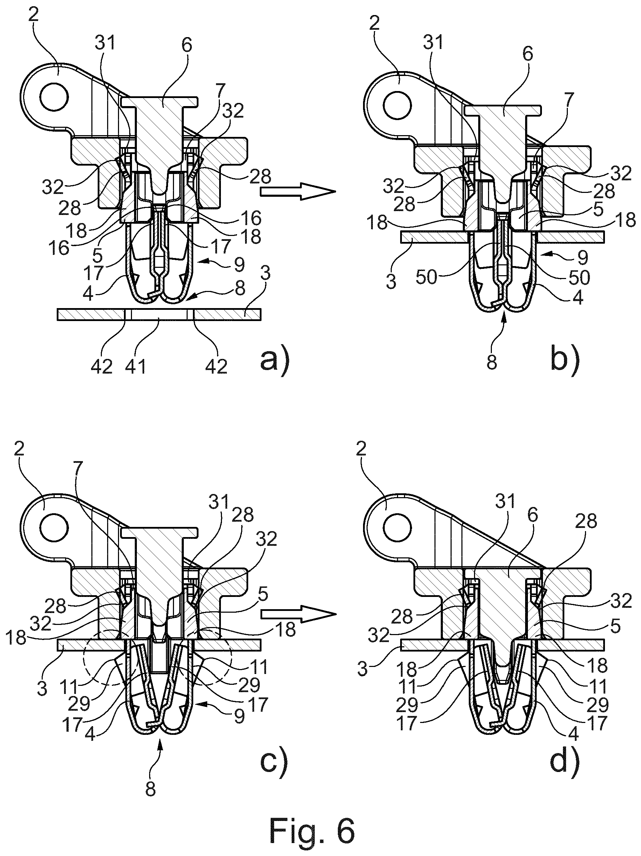

The second body 3 is provided as an insert 15 that is arranged inside the first body 4 and can be moved inside the first body 4 along the longitudinal axis A from a first position (Fig. 4, Fig. 6a), Fig. 6b), Fig. 7) to a second position (Fig. 6c), Fig. 6d), Fig. 9). The insert 15 has a contact surface 16 and the retaining element 10 has a counter-surface 17, the contact surface 16 faces into the retraction direction B and whereby the contact surface 16 is in contact with the counter-surface 17 when the insert 15 is in the first position (Fig. 4, Fig. 6a), Fig. 6b), Fig. 7) and the retaining element 10 is in the retracted position (Fig. 4, Fig. 6a), Fig. 6b), Fig. 7). The contact surface 16 is not in contact with the counter-surface 17 when the insert 15 is in the second position (Fig. 6c), Fig. 6d), Fig. 9).

The insert has two protrusions 18, which protrusions 18 each extends from inside the shaft 9 through a slit 19 in the shaft 9 to the outside of the shaft 9. Fig. 1 shows that the slit 19 extends from the shaft 9 up into the head 7. Slit 19 is arranged parallel to the longitudinal axis A. The protrusion 18 moves along the shaft 9 as the insert 15 is moved from the first position (Fig. 4, Fig. 6a), Fig. 6b), Fig. 7) in the direction of the second position (Fig. 6c), Fig. 6d), Fig. 9).

Holding elements 20 in form of dimples are provided either side of the slit 19 that is arranged in the middle of the side-wall 13. The holding elements protrude into the hollow shaft 9 and engage with recesses 21 in the insert 15 to hold the insert 15 in the first position (Fig. 4, Fig. 6a), Fig. 6b), Fig. 7).

The respective retaining element 10 is an end section of an element of the first body 4, which element also forms a side-wall 13 of the shaft that has the side-surface 12 and whereby the element is bend backwards at the tip 8 of the first body 4 forming a bended section 22, the bended section 22 acting as the spring 14.

The first body 4 is a unitary piece made by way of bending from a metal cut-out. A lock 54 is provided in one of the side-walls 26 of the head 7. The lock 54 is the point where two ends of the cut-out are connected to each other. The second body 5 is made from a plastic material.

As shown in Fig. 5, 6a), 6b), 6c), 6d), Fig. 7, Fig. 8, Fig. 9, Fig. 10, the device 30 has a first element 2 and a clip 1 according to the invention attached to the first element. The first element 30 has a protrusion 31 with a surface that faces away from the tip 8 of the clip 1 and is in contact with a surface 23 of the head 7 of the clip 1 that faces towards the tip 8.

As shown in Fig. 5, 6a), 6b), 6c), 6d), Fig. 9, Fig. 10, the system 40 has a device 30 according to the invention and a second element 3. The second element 3 having a hole 41, the first element 2 being arranged on a first side of the second element 3 and the shaft 9 of the clip 1 extending through the hole 41, the tip 11 of the retaining element 10 being arranged on a second side of the second element 3, which second side is opposite to the first side. The first element 2 can be a grab handle and the second element 3 can be a pillar of a car.

The system according to the invention is assembled by providing a device 30 according to the invention in a first configuration (Fig. 6a), Fig. 7, Fig. 8). In the first configuration, the retaining element 10 is in the retracted position and the insert 15 is in the first position. The device 30 is then moved relative to the second element 3 such that the shaft 9 is moved through the hole 41 of the second element 40 (Fig. 6b), Fig. 6c), whereby the device 30 is transferred from the first configuration into a second configuration (Fig. 6c), Fig. 6d), Fig. 9, Fig. 10), in which second configuration, the retaining element 10 has moved from the retracted position towards the normal position. In the embodiment shown in the sequence of Fig. 6a), 6b), 6c), 6d), the protrusion 18 comes into contact with a rim 42 that surrounds the hole 41 of the second element 3 (Fig. 6b) and as the shaft 9 is further moved into the hole 41, the engagement of the protrusion 18 with the rim 42 has the insert 15 moved from the first position to the second position.

In the embodiment shown in Fig. 5 and in the embodiment shown in Fig. 6a), 6b), 6c), 6d) and in the embodiment shown in Fig. 7 to 10, the clip 1 has a third body 6 in form of a pin that is pushed into the clip 1 once the device has taken up the second configuration. In Fig. 6a), 6b), 6c), 6d), the third body 6 is shown hovering above the first body 4 and the second body 5 purely for illustrative purposes. The third body 6 can be a standalone piece that is pushed into the clip 1 once the device has taken up the second configuration. As shown in Fig. 5, the third body 6 can have legs 24 with recesses 25 that can come in engagement with appropriately designed projections in the second element 3 (not shown in Fig. 5 due to the perspective).

The first element 2 has a channel 31 that passes through the first element 2. The clip 1 can be inserted into the channel 31 from one side. The channel 31 allows interaction with the inside of the hollow head 7 and possibly with the inside of the hollow shaft 9 and the insert 15 from the other side. Also the channel 31 allows for the third body 6 to be pushed into the hollow head.

Fig. 1 shows the insert 15 to have a square cross-section. The insert 15 has four side-walls 26, whereby neighboring side-walls 26 are arranged at 90° to each other. In the corners 27, the insert 15 is reinforced by way of more material being present in the corners 27.

Lugs 28 are provided on two opposing side-walls of the head 7. The lugs 28 engage with recesses 32 in the first element 2.

The tips 11 of the respective retaining element 10 are the ends of flags 29 that are provided as part of the respective retaining element 10. The respective retaining element 10 has a square basic body 50. By way of a 90° bend 51 at the sides of the respective square basic body 50, the material of the retaining element 10 is made to form the flags 29. The respective flag 29 protrudes from the inside of the hollow shaft 9 through a slit 52 to the outside such that the respective tip 11 of the retaining element 10 protrudes over the side-surface12 by a first amount (see for example Fig. 1).

The slits 52 are arranged to be parallel to the longitudinal axis A.

The slits 52 are arranged to be parallel to the slit 19.

The slits 52 at their ends that are closer to the tip 8 have dimples 53, which reinforce this end of the slit 52. The side-surface 12 is a flat surface that is arranged in a plane that is parallel to the longitudinal axis A.

The shaft 9 is a hollow shaft that is delimited on two sides by the side-walls 13, but from the two sides that are perpendicular to the side-walls 13 is not delimited by walls and hence open (see Fig. 1).

## Claims

1. Clip (1) for fastening a first element (2) to a second element (3), the clip (1) having a first body (4), the first body (4) comprising
• a head (7) and a tip (8),
• a hollow shaft (9) that extends from the head (7) to the tip (8) along a longitudinal axis (A),
• at least one retaining element (10), whereby the retaining element (10) has
o a normal position, in which a tip (11) of the retaining element (10) protrudes over a side-surface (12) of the shaft (9) by a first amount and
o a retracted position, in which the tip (11) of the retaining element (10) does not protrude over the side-surface (12) of the shaft (9) and is arranged inside the shaft (9) or does protrude over the side-surface (12) of the shaft (9), but by a second amount that is smaller than the first amount,
o whereby the tip (11) is moved along a retraction direction (B) as the retaining element (10) is moved from the normal position to the retracted position,
• a spring (14), whereby moving the retaining element (10) from the normal position to the retracted position loads the spring (14) such that in the retracted position the retaining element (10) is pretensioned to move back into the direction of the normal position,
whereby a second body (5) that as an insert (15) is arranged inside the first body (4) and can be moved inside the first body (4) along the longitudinal axis (A) from a first position to a second position,
whereby the insert (15) has a contact surface (16) and the retaining element (10) has a counter-surface (17),
whereby the contact surface (16) faces into the retraction direction (B),
whereby the contact surface (16) is in contact with the counter-surface (17) when the insert (15) is in the first position and the retaining element (10) is in the retracted position.

2. Clip according to claim 1, **characterized in that** the insert (15) has a protrusion (18), which protrusion (18) extends from inside the shaft (9) through a slit (19) in the shaft (9) to the outside of the shaft (9) and/or extends from inside the head (7) through a slit (19) in the head (7) to the outside of the head (7).

3. Clip according to claim 2, **characterized in that** the protrusion (18) moves along the shaft (9) as the insert (15) is moved from the first position in the direction of the second position.

4. Clip according to any one of claims 1 to 3, **characterized in that** the contact surface (16) is not in contact with the counter-surface (17) when the insert (15) is in the second position.

5. Clip according to any one of claims 1 to 4, **characterized by** holding elements (20) that protrude into the hollow shaft (9) and engage with recesses (21) in the insert (15) to hold the insert (15) in the first position.

6. Clip according to any one of claims 1 to 5, **characterized in that** the retaining element (10) is an end section of an element of the first body (4), which element also forms a side-wall (13) of the shaft that has the side-surface (12) and whereby the end section is bend backwards at the tip (8) of the first body (4) forming a bended section (22), the bended section (22) acting as the spring (14).

7. Clip according to anyone of claims 1 to 6, **characterized in that** the first body (4) is a unitary piece made by way of bending from a metal cut-out.

8. Clip according to anyone of claims 1 to 7, **characterized in that** the second body (5) is made from a plastic material.

9. Device (30) having a first element (2) and a clip (1) according to any one of claims 1 to 8 attached to the first element (2).

10. Device (30) according to claim 9, **characterized in that** the first element (2) has a protrusion with a surface that faces away from the tip (8) of the clip (1) and is in contact with a surface (23) of the head (7) of the clip (1) that faces towards the tip (8).

11. System (40) having a device (30) according to claim 9 or 10 and a second element (3), the second element (3) having a hole (41), the first element (2) being arranged on a first side of the second element (3) and the shaft (9) of the clip (1) extending through the hole (41), the tip (11) of the retaining element (10) being arranged on a second side of the second element (3), which second side is opposite to the first side.

12. System according to claim 11, **characterized in that** the first element (2) is a grab handle and the second element (3) is a pillar of a car.

13. Method for assembly the system of claim 11 or 12, whereby
• the device (30) is in a first configuration, in which first configuration the retaining element (10) is in the retracted position and the insert (15) is in the first position,
• the device (30) in the first configuration is moved relative to the second element (3) such that the shaft (9) is moved through the hole (41) of the second element (3),
• the device (30) is transferred from a first configuration into a second configuration, in which second configuration the retaining element (10) has moved from the retracted position towards the normal position.

14. Method according to claim 13 **characterized in that** during the movement of the device (30) relative to the second element (3) a rim (42) of the hole (41) comes into contact with a protrusion (18) of the insert (15), whereby a continued movement of the device (30) relative to the second element (3) leads to the protrusion (18) moving in a slit (19).

## Patentansprüche

1. Clip (1) zum Befestigen eines ersten Elements (2) an einem zweiten Element (3), wobei der Clip (1) einen ersten Körper (4) aufweist, wobei der erste Körper (4) umfasst
• einen Kopf (7) und eine Spitze (8),
• einen hohlen Schaft (9), der sich vom Kopf (7) zur Spitze (8) entlang einer Längsachse (A) erstreckt,
• mindestens ein Halteelement (10), wobei das Halteelement (10)
o eine Normalposition, in der eine Spitze (11) des Halteelements (10) um einen ersten Abstand über eine Seitenfläche (12) des Schafts (9) hinausragt, und
o eine zurückgezogene Position, in der die Spitze (11) des Halteelements (10) nicht über die Seitenfläche (12) des Schafts (9) hinausragt und innerhalb des Schafts (9) angeordnet ist oder über die Seitenfläche (12) des Schafts (9) hinausragt, jedoch um einen zweiten Abstand, der kleiner ist als der erste Abstand.
∘ wobei die Spitze (11) entlang einer Rückziehrichtung (B) bewegt wird, wenn das Halteelement (10) von der Normalposition in die zurückgezogene Position bewegt wird,
• eine Feder (14), wobei das Bewegen des Halteelements (10) von der Normalposition in die zurückgezogene Position die Feder (14) so belastet, dass das Halteelement (10) in der zurückgezogenen Position vorgespannt ist, um sich zurück in Richtung der Normalposition zu bewegen,
wobei ein zweiter Körper (5), der als Einsatz (15) innerhalb des ersten Körpers angeordnet ist (4) und innerhalb des ersten Körpers (4) entlang der Längsachse (A) von einer ersten Position in eine zweite Position bewegbar ist,
wobei der Einsatz (15) eine Kontaktfläche (16) und das Halteelement (10) eine Gegenfläche (17) aufweist,
wobei die Kontaktfläche (16) in Rückziehrichtung (B) weist,
wobei die Kontaktfläche (16) mit der Gegenfläche (17) in Kontakt steht, wenn sich der Einsatz (15) in der ersten Position und das Halteelement (10) in der zurückgezogenen Position befindet.

2. Clip gemäß Anspruch 1, **dadurch gekennzeichnet, dass** der Einsatz (15) einen Vorsprung (18) aufweist, wobei sich der Vorsprung (18) von der Innenseite des Schafts (9) durch einen Spalt (19) im Schaft (9) zur Außenseite des Schafts (9) und/oder von der Innenseite des Kopfes (7) durch einen Spalt (19) im Kopf (7) zur Außenseite des Kopfes (7) erstreckt.

3. Clip gemäß Anspruch 2, **dadurch gekennzeichnet, dass** sich der Vorsprung (18) entlang des Schafts (9) bewegt, wenn der Einsatz (15) von der ersten Position in Richtung der zweiten Position bewegt wird.

4. Clip gemäß einem der Ansprüche 1 bis 3, **dadurch gekennzeichnet, dass** die Kontaktfläche (16) nicht mit der Gegenfläche (17) in Kontakt steht, wenn sich der Einsatz (15) in der zweiten Position befindet.

5. Clip gemäß einem der Ansprüche 1 bis 4, **gekennzeichnet durch** Halteelemente (20), die in den hohen Schaft (9) hineinragen und in Ausnehmungen (21) im Einsatz (15) eingreifen, um den Einsatz (15) in der ersten Position zu halten.

6. Clip nach einem der Ansprüche 1 bis 5, **dadurch gekennzeichnet, dass** das Halteelement (10) ein Endabschnitt eines Elements des ersten Körpers (4) ist, wobei dieses Element auch eine Seitenwand (13) des Schafts bildet, der die Seitenfläche (12) aufweist, und wobei der Endabschnitt an der Spitze (8) des ersten Körpers (4) nach hinten gebogen ist und einen gebogenen Abschnitt (22) bildet, wobei der gebogene Abschnitt (22) als Feder (14) wirkt.

7. Clip gemäß einem der Ansprüche 1 bis 6, **dadurch gekennzeichnet, dass** der erste Körper (4) ein einteiliges Stück ist, das durch Biegen aus einem Metallzuschnitt hergestellt ist.

8. Clip gemäß einem der Ansprüche 1 bis 7, **dadurch gekennzeichnet, dass** der zweite Körper (5) aus einem Kunststoffmaterial hergestellt ist.

9. Vorrichtung (30) mit einem ersten Element (2) und einer Clip (1) gemäß einem der Ansprüche 1 bis 8, die an dem ersten Element (2) befestigt ist.

10. Vorrichtung (30) nach Anspruch 9, **dadurch gekennzeichnet, dass** das erste Element (2) einen Vorsprung mit einer Oberfläche aufweist, die von der Spitze (8) der Klammer (1) weg zeigt und mit einer Oberfläche (23) des Kopfes (7) des Clips (1) in Kontakt steht, die zur Spitze (8) hin zeigt.

11. System (40) mit einer Vorrichtung (30) gemäß Anspruch 9 oder 10 und einem zweiten Element (3), wobei das zweite Element (3) ein Loch (41) aufweist, das erste Element (2) auf einer ersten Seite des zweiten Elements (3) angeordnet ist und sich der Schaft (9) der Klammer (1) durch das Loch (41) erstreckt, wobei die Spitze (11) des Halteelements (10) auf einer zweiten Seite des zweiten Elements (3) angeordnet ist, die der ersten Seite gegenüberliegt.

12. System gemäß Anspruch 11, **dadurch gekennzeichnet, dass** das erste Element (2) ein Haltegriff und das zweite Element (3) eine Säule eines Fahrzeugs ist.

13. Verfahren zum Zusammenbau des Systems gemäß Anspruch 11 oder 12, wobei
o sich die Vorrichtung (30) in einer ersten Stellung befindet, in der sich das Halteelement (10) in der zurückgezogenen Position und der Einsatz (15) in der ersten Position befindet,
o die Vorrichtung (30) in der ersten Stellung relativ zum zweiten Element (3) so bewegt wird, dass die Welle (9) durch die Öffnung (41) des zweiten Elements (3) bewegt wird,
o die Vorrichtung (30) von einer ersten Stellung in eine zweite Stellung überführt wird, in der sich das Halteelement (10) aus der zurückgezogenen Position in Richtung der Normalposition bewegt hat.

14. Verfahren nach Anspruch 13, **dadurch gekennzeichnet, dass** während der Bewegung der Vorrichtung (30) relativ zum zweiten Element (3) ein Rand (42) des Lochs (41) mit einem Vorsprung (18) des Einsatzes (15) in Kontakt kommt, wodurch eine fortgesetzte Bewegung der Vorrichtung (30) relativ zum zweiten Element (3) dazu führt, dass sich der Vorsprung (18) in einem Spalt (19) bewegt.

## Revendications

1. Pince (1) de fixation d'un premier élément (2) sur un second élément (3), la pince (1) présentant un premier corps (4), le premier corps (4) comprenant
• une tête (7) et une pointe (8),
• une tige creuse (9) qui s'étend de la tête (7) à la pointe (8) le long d'un axe longitudinal (A),
• au moins un élément de retenue (10), ledit élément de retenue (10) ayant
∘ une position normale, dans laquelle une pointe (11) de l'élément de retenue (10) fait saillie sur une surface latérale (12) de la tige (9) d'une première distance et
∘ une position rétractée, dans laquelle la pointe (11) de l'élément de retenue (10) ne fait pas saillie sur la surface latérale (12) de la tige (9) et est disposée à l'intérieur de la tige (9) ou fait saillie sur la surface latérale (12) de la tige (9), mais d'une seconde distance qui est inférieure à la première distance,
∘ ladite pointe (11) étant déplacée le long d'une direction de rétraction (B) lorsque l'élément de retenue (10) est déplacé de la position normale à la position rétractée,
• un ressort (14), moyennant quoi le déplacement de l'élément de retenue (10) de la position normale à la position rétractée charge le ressort (14) de telle sorte que dans la position rétractée, l'élément de retenue (10) est précontraint pour revenir dans la direction de la position normale,
dans lequel un second corps (5) qui, en tant qu'insert (15), est agencé à l'intérieur du premier corps (4) et peut être déplacé à l'intérieur du premier corps (4) le long de l'axe longitudinal (A) d'une première position à une seconde position,
dans lequel l'insert (15) a une surface de contact (16) et l'élément de retenue (10) a une contre-surface (17),
dans lequel la surface de contact (16) est tournée dans la direction de rétraction (B),
dans lequel la surface de contact (16) est en contact avec la contre-surface (17) lorsque l'insert (15) est dans la première position et l'élément de retenue (10) est dans la position rétractée.

2. Pince selon la revendication 1, **caractérisée en ce que** l'insert (15) a une saillie (18), laquelle saillie (18) s'étend depuis l'intérieur de la tige (9) à travers une fente (19) dans la tige (9) jusqu'à l'extérieur de la tige (9) et/ou s'étend depuis l'intérieur de la tête (7) à travers une fente (19) dans la tête (7) jusqu'à l'extérieur de la tête (7).

3. Pince selon la revendication 2, **caractérisée en ce que** la saillie (18) se déplace le long de la tige (9) lorsque l'insert (15) est déplacé depuis la première position dans la direction de la seconde position.

4. Pince selon l'une quelconque des revendications 1 à 3, **caractérisée en ce que** la surface de contact (16) n'est pas en contact avec la contre-surface (17) lorsque l'insert (15) est dans la seconde position.

5. Pince selon l'une quelconque des revendications 1 à 4, **caractérisée par** des éléments de maintien (20) qui font saillie dans la tige creuse (9) et viennent en prise avec des évidements (21) dans l'insert (15) pour maintenir l'insert (15) dans la première position.

6. Pince selon l'une quelconque des revendications 1 à 5, **caractérisée en ce que** l'élément de retenue (10) est une section d'extrémité d'un élément du premier corps (4), lequel élément forme également une paroi latérale (13) de la tige qui a la surface latérale (12) et moyennant quoi la section d'extrémité est pliée vers l'arrière au niveau de la pointe (8) du premier corps (4) formant une section pliée (22), la section pliée (22) agissant comme le ressort (14).

7. Pince selon l'une quelconque des revendications 1 à 6, **caractérisée en ce que** le premier corps (4) est une pièce unitaire réalisée par pliage à partir d'une découpe métallique.

8. Pince selon l'une quelconque des revendications 1 à 7, **caractérisée en ce que** le second corps (5) est fabriqué à partir d'une matière plastique.

9. Dispositif (30) ayant un premier élément (2) et une pince (1) selon l'une quelconque des revendications 1 à 8 fixée sur le premier élément (2).

10. Dispositif (30) selon la revendication 9, **caractérisé en ce que** le premier élément (2) a une saillie avec une surface qui est tournée à l'opposé de la pointe (8) de la pince (1) et est en contact avec une surface (23) de la tête (7) de la pince (1) qui est tournée vers la pointe (8).

11. Système (40) présentant un dispositif (30) selon la revendication 9 ou 10 et un second élément (3), le second élément (3) présentant un trou (41), le premier élément (2) étant agencé sur un premier côté du second élément (3) et la tige (9) de la pince (1) s'étendant à travers le trou (41), la pointe (11) de l'élément de retenue (10) étant agencée sur un second côté du second élément (3), lequel second côté est opposé au premier côté.

12. Système selon la revendication 11, **caractérisé en ce que** le premier élément (2) est une poignée de préhension et le second élément (3) est un pilier de voiture.

13. Procédé d'assemblage du système selon la revendication 11 ou 12, dans lequel
• le dispositif (30) est dans une première configuration, dans laquelle première configuration l'élément de retenue (10) est dans la position rétractée et l'insert (15) est dans la première position,
• le dispositif (30) dans la première configuration est déplacé par rapport au second élément (3) de sorte que la tige (9) est déplacée à travers le trou (41) du second élément (3),
• le dispositif (30) est transféré d'une première configuration à une seconde configuration, dans laquelle seconde configuration l'élément de retenue (10) est déplacé de la position rétractée vers la position normale.

14. Procédé selon la revendication 13, **caractérisé en ce que** pendant le déplacement du dispositif (30) par rapport au second élément (3), un rebord (42) du trou (41) entre en contact avec une saillie (18) de l'insert (15), moyennant quoi un mouvement continu du dispositif (30) par rapport au second élément (3) entraîne le déplacement de la saillie (18) dans une fente (19).
